Europäisches Patentamt

European Patent Office

Office européen des brevets

(19)

(11) **EP 0 708 395 B1**

(12) **FASCICULE DE BREVET EUROPEEN**

(45) Date de publication et mention de la délivrance du brevet:
**24.11.1999 Bulletin 1999/47**

(51) Int Cl.⁶: **G05D 1/06**

(21) Numéro de dépôt: **95402296.8**

(22) Date de dépôt: **13.10.1995**

(54) **Dispositif d'aide au pilotage, en phase d'aterrissage, d'un aéronef**

Einrichtung zur Steuerungshilfe eines Flugzeugs während der Landung

Device for aiding piloting of an aircraft, when landing

(84) Etats contractants désignés:
**BE CH DE ES FR GB IT LI NL SE**

(30) Priorité: **18.10.1994 FR 9412410**

(43) Date de publication de la demande:
**24.04.1996 Bulletin 1996/17**

(73) Titulaire: **THOMSON-CSF SEXTANT**
**78141 Vélizy Villacoublay (FR)**

(72) Inventeurs:
• **Coirier, Philippe**
  **F-92402 Courbevoie Cedex (FR)**

• **Goujon, Alain**
  **F-92402 Courbevoie Cedex (FR)**
• **Parus, Roger**
  **F-92402 Courbevoie Cedex (FR)**

(74) Mandataire: **Beylot, Jacques et al**
**Thomson-CSF Propriété Intellectuelle,**
**13, Avenue du Président Salvador Allende**
**94117 Arcueil Cédex (FR)**

(56) Documents cités:
EP-A- 0 530 924      WO-A-82/00063
US-A- 3 437 292      US-A- 5 260 702

## Description

La présente invention concerne les dispositifs d'aide au pilotage d'un aéronef par mauvaise visibilité, à l'atterrissage, en approche finale, avant le toucher des roues.

Pour faciliter les atterrissages en cas de mauvaise visibilité, les pistes sont, en générale, équipées d'ILS qui sont des équipements radioélectriques constitués d'un émetteur de contrôle d'alignement axial connu sous l'appellation anglo-saxonne de "Localizer" et d'un émetteur de contrôle de pente d'approche connu sous l'appellation anglo-saxonne de "Glide". L'ILS guide l'aéronef jusqu'au seuil de la piste à une hauteur d'environ 50 pieds et il reste à effectuer un arrondi pour le toucher des roues. Celui-ci doit s'effectuer dans une certaine zone en début de piste dite zone nominale de toucher des roues, qui est difficile à apprécier visuellement en cas de mauvaise visibilité. Or il convient d'éviter un toucher des roues au-delà de cette zone car cela peut avoir des conséquences dramatiques. Des systèmes d'aide au pilotage, en phase d'atterrissage sont connus par US-A-5 260 702 et EP-A-0 530 924.

La présente invention a pour but de prévenir les cas de poser trop long lors des atterrissages.

Elle a pour objet un dispositif d'aide au pilotage, en phase d'atterrissage, d'un aéronef pourvu d'un système de navigation donnant sa vitesse et sa hauteur par rapport au sol et d'un capteur de charge équipant son train d'atterrissage et détectant le poser des roues. Il est remarquable en ce qu'il comporte des moyens d'intégration de la vitesse sol, des moyens de détection de franchissement par valeur inférieure d'un seuil de hauteur par rapport au sol déclenchant lesdits moyens d'intégration et des moyens de détection de franchissement par valeur supérieure d'un seuil de distance opérant sur le signal délivré par les moyens d'intégration et engendrant une alarme.

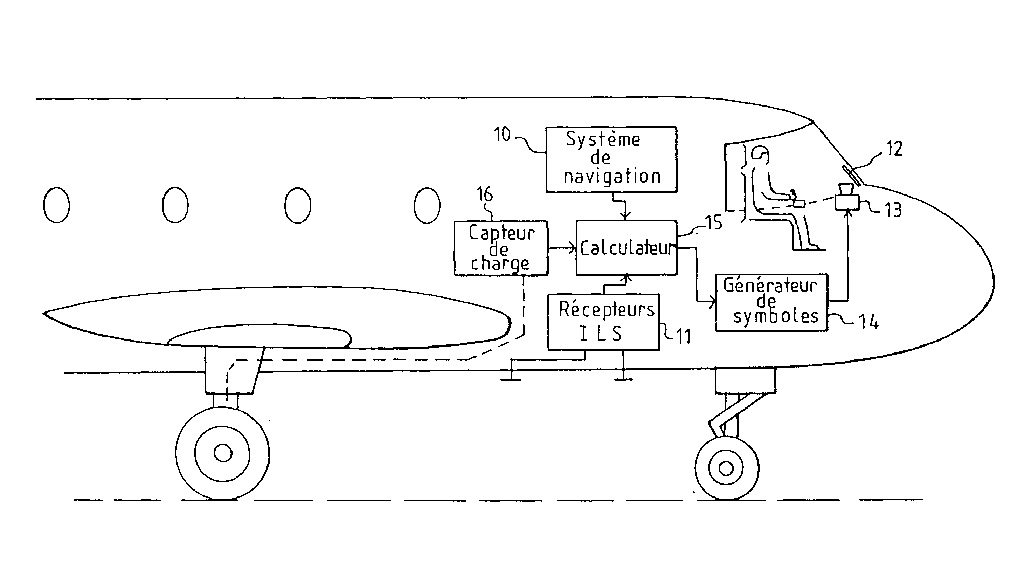

D'autres caractéristiques et avantages de l'invention ressortiront de la description ci-après d'un mode de réalisation donné à titre d'exemple. Cette description sera faite en regard du dessin dont la figure unique représente schématiquement un avion équipé du dispositif selon l'invention.

Pour éviter les cas d'atterrissage trop long qui sont particulièrement dangereux lorsque la visibilité est réduite, on propose d'estimer la distance parcourue par un aéronef depuis le seuil d'une piste avant le toucher des roues et d'émettre une alarme dès que la zone extrême de toucher des roues paraît avoir été dépassée.

Le passage au seuil de piste lors d'un atterrissage est assimilé au franchissement, par valeur inférieure, d'un seuil de hauteur par rapport au sol. En effet , même en cas de mauvaise visibilité, on peut admettre que l'aéronef se présente au seuil de piste avec le cap et l'altitude corrects grâce au guidage ILS.

La constatation du toucher des roues se fait grâce à un capteur de charge équipant le train d'atterrissage qui constate, par exemple, une brusque compression des amortisseurs hydrauliques du train d'atterrissage.

L'appréciation de la distance parcourue entre le passage du seuil de piste et le toucher des roues ne se fait pas, par une simple mesure de temps qui n'est pas significative en raison des variations possibles des configurations d'atterrissage, mais par une intégration de la vitesse de l'aéronef par rapport au sol. Lorsque la distance calculée dépasse une distance forfaitaire déterminée à partir des règlements d'opérations par mauvaise visibilité, une alarme est présentée au pilote.

Les paramètres pris en considération sont:

- la hauteur au-dessus du sol ALTRA fournie par une radiosonde faisant partie du système de navigation de l'aéronef,
- la hauteur nominale RATHRES de présentation de l'aéronef au seuil de piste qui est prise pour valeur de seuil,
- la distance maximale MAXLAND dont le franchissement est autorisé après passage au seuil de la piste sans poser les roues, et
- la vitesse SPDGND de l'aéronef par rapport au sol.

La condition d'activation de l'alarme est le franchissement du seuil MAXLAND par une fonction croissante du temps X(t) qui est l'intégrale de la vitesse SPDGND par rapport au sol de l'aéronef depuis l'instant $t_0$ de franchissement du seuil de hauteur RATHRES

Cela s'exprime encore par:

$$X(t) > MAXLAND$$

avec

$$X(t) = \int_{t_0}^{t} SPDGND \times dt \qquad (1)$$

avec t égal à $t_0$ quand ALTRA devient inférieure à RATHRES.

La figure illustre l'architecture générale d'un équipement installé à bord d'un avion pour afficher une alarme de poser trop long. L'avion dont on distingue la partie avant avec le poste de pilotage, est équipé d'un système de navigation 10, de récepteurs Glide et Localizer d'ILS 11 et d'un collimateur 12.

Le système de navigation 10 fournit les indications habituelles dont, notamment la vitesse par rapport au sol et la hauteur par rapport au sol.

Les récepteurs Glide et Localizer d'ILS 11 permettent, en coopération avec les émetteurs Glide et Localizer d'ILS équipant les pistes d'atterrissage, de présenter l'avion dans l'axe d'une piste d'atterrissage, au seuil de celle-ci, avec un alignement correct et une pente de descente de l'ordre de trois degrés.

Le collimateur 12 est de conception classique avec un écran transparent qui est placé devant les yeux du pilote, en superposition avec le paysage, et sur lequel un dispositif de projection 13 vient afficher différents réticules relatifs au pilotage dont, en phase d'atterrissage, une alarme de poser trop long.

Le dispositif de projection 13 est piloté par un générateur de symboles 14 qui reçoit des commandes de mise à jour d'un calculateur 15 à logique programmée relié au système de navigation 10, aux sorties des récepteurs Glide et Localizer 11 de l'ILS et à la sortie d'un capteur de charge 16 sensible à la pression des amortisseurs hydrauliques du train principal d'atterrissage. Le calculateur 15, qui assure la mise à jour des différents réticules affichés sur le collimateur 12, veille à l'affichage du réticule d'alarme de poser trop long en mettant en oeuvre des algorithmes réalisant les tâches suivantes :

- détection du franchissement de la valeur minimale de hauteur au-dessus du sol RATHRES coïncidant avec le franchissement du seuil d'une piste à l'atterrissage,
- calcul de la distance parcourue depuis le seuil de piste $X(t)$ par intégration de la vitesse au sol SPDGND selon la relation (1), et
- activation de l'alarme de poser trop long en cas de dépassement de la distance maximale autorisée sans poser des roues après passage au seuil MAXLAND.

Bien entendu, l'alarme de poser trop long peut aussi être une alarme lumineuse ou auditive en cabine et ne nécessite pas l'utilisation obligatoire d'un collimateur. Elle peut également être couplée avec des alertes ou messages de survol de points du sol déterminés par l'équipage ou les systèmes de l'avion.

## Revendications

1. Dispositif d'aide au pilotage, en phase d'atterrissage, d'un aéronef pourvu d'un système de navigation (10) donnant sa vitesse et sa hauteur par rapport au sol et d'un capteur de charge (16) équipant son train d'atterrissage et détectant le poser des roues, comportant des moyens d'intégration de la vitesse sol, des moyens de détection de franchissement par valeur inférieure d'un seuil de hauteur par rapport au sol déclenchant lesdits moyens d'intégration et caractérisé en ce qu'il comporte des moyens de détection de franchissement par valeur supérieure d'un seuil de distance opérant sur le signal délivré par les moyens d'intégration et engendrant une alarme, en l'absence d'une détection de poser des roues par le capteur de charge (16).

2. Dispositif selon la revendication 1, équipant un aéronef pourvu d'un collimateur (12) caractérisé en ce que lesdits moyens de détection de franchissement par valeur supérieure d'un seuil de distance engendrent une alarme visuelle dans le collimateur de vol.

3. Dispositif selon la revendication 1, caractérisé en ce que lesdits moyens de détection de franchissement par valeur supérieure d'un seuil de distance engendrent une alarme lumineuse.

4. Dispositif selon la revendication 1, caractérisé en ce que lesdits moyens de détection de franchissement par valeur supérieure d'un seuil de distance engendrent une alarme auditive.

## Patentansprüche

1. Vorrichtung zur Unterstützung des Piloten eines Flugzeugs in der Landephase, wobei das Flugzeug ein Navigationssystem (10), das seine Geschwindigkeit und seine Flughöhe über dem Boden angibt, und eine Lastsonde (16) am Fahrwerk besitzt, mit der das Aufsetzen der Räder erfaßt wird, wobei die Vorrichtung Mittel zur Integration der Geschwindigkeit über dem Boden und Mittel zur Erfassung des Unterschreitens einer Flughöhenschwelle über dem Boden aufweist, die die Integrationsmittel auslöst, dadurch gekennzeichnet, daß die Vorrichtung weiter Mittel

## EP 0 708 395 B1

zur Erfassung des Überschreitens eines Streckenschwellwerts besitzt, die auf das von den Integrationsmitteln gelieferte Signal einwirken und einen Alarm erzeugen, wenn die Lastsonde (16) das Aufsetzen der Räder nicht feststellt.

2. Vorrichtung nach Anspruch 1, die in ein einen Kollimator (12) enthaltendes Flugzeug eingebaut ist, dadurch gekennzeichnet, daß die Mittel zur Erfassung des Überschreitens eines Streckenschwellwerts einen visuellen Alarm im Flugzeugkollimator erzeugen.

3. Vorrichtung nach Anspruch 1, dadurch gekennzeichnet, daß die Mittel zur Erfassung des Überschreitens eines Streckenschwellwerts ein Lichtsignal erzeugen.

4. Vorrichtung nach Anspruch 1, dadurch gekennzeichnet, daß die Mittel zur Erfassung des Überschreitens eines Streckenschwellwerts einen akustischen Alarm erzeugen.

**Claims**

1. Device for aiding the piloting, in the landing phase, of an aircraft provided with a navigation system (10) giving its speed and its height with respect to the ground and with a load sensor (16) fitted to its landing gear and detecting the alighting of the wheels, comprising means for integrating the ground speed, means for detecting the crossing of a lower value of a height threshold with respect to the ground triggering the said integration means, characterized in that it further comprises means for detecting the crossing of an upper value of a distance threshold operating on the signal delivered by the integration means and tripping an alarm in the absence of detection of the alighting of the wheels by the load sensor (16).

2. Device according to Claim 1, fitted to an aircraft provided with a collimator (12) characterized in that the said means for detecting the crossing of an upper value of a distance threshold trip a visual alarm in the flight collimator.

3. Device according to Claim 1, characterized in that the said means for detecting the crossing of an upper value of a distance threshold trip a luminous alarm.

4. Device according to Claim 1, characterized in that the said means for detecting the crossing of an upper value of a distance threshold trip an audible alarm.

Système
de
navigation

Capteur
de
charge

Calculateur

Récepteurs
I L S

Générateur
de
symboles

EP 0 708 395 B1